# EUROPÄISCHE PATENTSCHRIFT

(11) **EP 1 544 068 B1**
(45) Veröffentlichungstag und Bekanntmachung des Hinweises auf die Patenterteilung: **09.04.2008**
(21) Anmeldenummer: 04106172.2
(22) Anmeldetag: 30.11.2004
(51) Int. Cl.: B60S 1/08

(54) **Messeinheit für einen Regensensor zum Detektieren von Feuchtigkeit auf einer Oberfläche und ein Feuchtigkeitssensor**
Measuring unit for a rain sensor to detect the umiditiy on a surface, and a humidity sensor
Unité de mesure pour un capteur de pluie pour détecter l'humidité sur une surface et un capteur d'humidité

(30) Priorität: 16.12.2003 DE 10358855
(43) Veröffentlichungstag der Anmeldung: 22.06.2005
(73) Patentinhaber: ROBERT BOSCH GMBH, 70442 Stuttgart (DE)
(72) Erfinder: Bochat, Ralf, 76275, Ettlingen (DE); Glohr, Francis, 67500, Haguenau (FR); Merkel, Klaus, 76596, Forbach (DE)

(56) Entgegenhaltungen:
- EP-A- 1 526 048
- WO-A-97/46430
- DE-C1- 19 603 553
- US-A- 3 863 066

## Beschreibung

Die Erfindung betrifft eine Messeinheit für einen Regensensor zum Detektieren von Feuchtigkeit auf einer Oberfläche und zum Ausgeben eines periodischen Ausgangssignals. Die Erfindung betrifft weiterhin einen Feuchtigkeitssensor mit einer solchen Messeinheit.

Feuchtigkeitssensoren werden z.B. in Kraftfahrzeugen an einer der Außenumgebung zugewandten Oberfläche, insbesondere der Windschutzscheibe, angebracht, um darauf befindliche Feuchtigkeit oder Tröpfchen zu detektieren und dadurch das Vorhandensein von Regen zu erkennen. Dies dient dazu, abhängig von dem detektierten Maß an Feuchtigkeit eine Scheibenwischanlage automatisch zu betreiben, um eine klare Sicht für den Fahrer sicherzustellen.

In einem Feuchtigkeitssensor sind eine Strahlungssendeeinrichtung und eine Strahlungsempfangseinrichtung vorgesehen, wobei die von der Strahlungssendeeinrichtung emittierte Strahlung in die Windschutzscheibe eingekoppelt wird und an der äußeren Oberfläche der Windschutzscheibe so reflektiert wird, dass die emittierte Strahlung nach ihrer Reflektion auf die Strahlungsempfangseinrichtung fallen kann. Befinden sich an der Reflektionsstelle Tröpfchen oder ist die Reflektionsstelle beschlagen, so wird ein Anteil der emittierten Strahlung an der Oberfläche nicht reflektiert, sondern an die Umgebung abgegeben. Dadurch verringert sich der Anteil der Strahlung, der in Richtung der Strahlungsempfangseinrichtung reflektiert wird, wobei das Maß an Feuchtigkeit über den verbliebenen Anteil der reflektierten emittierten Strahlung bestimmt werden kann.

Zur Detektion des Maßes an Feuchtigkeit auf der Windschutzscheibe wird der in der Strahlungsempfangseinrichtung empfangene, an der Oberfläche der Windschutzscheibe reflektierte Anteil der emittierten Strahlung in einer Messeinheit ausgewertet und ein entsprechendes Ausgangssignal abhängig davon generiert.

Die Strahlungsempfangseinrichtung ist häufig als Photodiode ausgeführt, die mit einem Kondensator verschaltet ist, der durch den Strom, der durch die Photodiode abhängig von der empfangenen Strahlung fließt, aufgeladen wird. Der Kondensator wird dabei eine vorbestimmte Zeit aufgeladen, wobei anschließend die Ladespannung am Kondensator gemessen wird. Diese Ladespannung ist dabei proportional zur empfangenen Strahlungsmenge, die auf die Strahlungsempfangseinrichtung fällt. Aus der gemessenen Spannung kann die Strahlungsstärke der auf die Strahlungsempfangseinrichtung eingefallenen Strahlung bestimmt werden. Alternativ kann die Zeit gemessen werden, die der zu messende Strom benötigt, um an dem Ladekondensator eine definierte Spannungsschwelle zu überschreiten. Aus der gemessenen Zeit kann der zu bestimmende Messstrom bzw. die Strahlungsstärke der empfangenen Strahlung bestimmt werden.

Eine gattungsgemäße Messeinheit ist aus dem Dokument DE-A-19603553 bekannt.

Solche Messeinheiten für Regensensoren, insbesondere für den Einsatz in Kraftfahrzeugen, müssen so gestaltet sein, dass sie in verschiedene Typen von Kraftfahrzeugen eingesetzt werden können und mit verschiedenen Strahlungssendeeinrichtungen unterschiedlicher Strahlungsstärken bzw. Wellenlängen zusammen arbeiten können. Durch die unterschiedlichen Orte der Anordnung auf der Windschutzscheibe, sowie aufgrund der unterschiedlichen Parameter der Windschutzscheibe muss nach dem Anbringen des Feuchtigkeitssensors üblicherweise eine Vormessung zur Messbereichsbestimmung durchgeführt werden, um den Feuchtigkeitssensor nach seinem Einbau so zu kalibrieren, dass die Messung der Ladespannung innerhalb des bevorzugten Messbereichs eines Spannungsmessgeräts erfolgt.

Es ist Aufgabe der vorliegenden Erfindung, eine Messeinheit, und einen Feuchtigkeitssensor zur Verfügung zu stellen, wobei selbst bei der Extrembedingung, dass keine Strahlung von der Strahlungssendeeinrichtung auf die Strahlungsempfangseinrichtung fällt, das Bezugspotential erreicht werden kann, so dass ein periodisches Ausgangssignal ausgegeben werden kann.

Diese Aufgabe wird durch die Messeinheit nach Anspruch 1, und den Feuchtigkeitssensor nach Anspruch 8 gelöst.

Weitere vorteilhafte Ausgestaltungen der Erfindung sind in den abhängigen Ansprüchen angegeben.

Gemäß einem ersten Aspekt der vorliegenden Erfindung ist eine Messeinheit für einen Feuchtigkeitssensor zum Detektieren von Feuchtigkeit auf einer Oberfläche und zum Ausgeben eines periodischen Ausgangssignals vorgesehen. Die Messeinheit weist eine Strahlungsempfangseinrichtung auf, um einen von dem Maß an Feuchtigkeit auf der Oberfläche abhängige Strahlung zu empfangen. Die Messeinheit weist weiterhin eine Messvorrichtung auf, die mit der Strahlungsempfangseinrichtung verbunden ist und die einen Kondensator aufweist, der mit einem von dem Anteil der empfangenen Strahlung abhängigen Messstrom aufladbar ist. Die Messvorrichtung ist so gestaltet, um den Kondensator periodisch bis zu einem von einem vorgegebenen Bezugspotential bestimmten Potential aufzuladen und anschließend zu entladen. Gemäß dem periodischen Aufladen und Entladen wird ein periodisches Ausgangssignal ausgegeben, dessen Periodendauer durch das Aufladen und Entladen bestimmt ist und von dem Maß der empfangenen Strahlung abhängt.

Es wird also abhängig von dem Messstrom ein periodisches Ausgangssignal generiert, mit dem das Maß an Feuchtigkeit auf der Oberfläche bestimmbar ist. Da der Messstrom direkt von dem Maß an Feuchtigkeit auf der Oberfläche abhängt, ist das Maß an Feuchtigkeit über die Frequenz, die Periodendauer und/oder die Anzahl der Perioden innerhalb eines vorbestimmten Zeitbereichs bestimmbar.

Da der Empfangsstrom über mehrere Lade- und Entladeintervalle bestimmt werden kann, kann der Kondensator der Messvorrichtung auf den in der praktischen Ausgestaltung kleinstmöglichen Empfangsstrom ausgelegt werden. Dadurch wird das Auflösungsvermögen der Messeinheit um ein Vierfaches erhöht.

Insbesondere im Bereich von Feuchtigkeitssensoren für Kraftfahrzeuge ist es notwendig, eine Messeinheit zur Verfügung zu stellen, die sich für verschiedene Typen und verschiedene Konfigurationen von Feuchtigkeitssensoren, insbesondere Strahlungssendeeinrichtungen unterschiedlicher Strahlungsstärken und unterschiedlicher Transparenzen von Windschutzscheiben eignen, so dass ein Kalibiervorgang zwischen dem Feuchtigkeitssensor und einer daran angeschlossenen Auswerteeinheit entfallen kann. Mit der vorliegenden Messeinheit kann weiterhin auf eine Arbeitspunkteinstellung durch eine Anpassung der Sendeleistung einer in dem Feuchtigkeitssensor umfassten Strahlungsquelle verzichtet werden, wodurch der Bauteilaufwand verringert wird.

Weiterhin kann die Messeinheit auch für Strommessungen anderer Sensoren, insbesondere in den Feuchtigkeitssensor integrierte Sensoren, verwendet werden. Die Anpassung der Sendeleistung bisheriger Feuchtigkeitssensoren ist aufgrund der unterschiedlichen Transmission der Windschutzscheiben notwendig, so dass unterschiedliche Bestückungen mit Strahlungsquellen in diesen herkömmlichen Feuchtigkeitssensoren erforderlich waren.

Mit der erfindungsgemäßen Messeinheit ist es nicht länger notwendig, von der Scheibentransmission eine individuelle Bauteilbestückung für einen Feuchtigkeitssensor durchzuführen. Dadurch ist eine Reduzierung der Variantenvielfalt möglich, wodurch Kosten eingespart werden können.

Vorzugsweise weist die Messvorrichtung eine Vergleichereinrichtung auf, um das Kondensatorpotential mit dem fest vorgegebenen Bezugspotential zu vergleichen, wobei die Messvorrichtung den Kondensator entlädt, nachdem das Bezugspotential erreicht wurde. Auf diese Weise kann eine Rückkopplung geschaffen werden, die ein von der empfangenen Strahlungsstärke abhängiges Oszillieren der Kondensatorspannung bewirkt. Insbesondere kann die Kondensatorspannung dem Ausgangssignal entsprechen. Es ist auch möglich, dass das Ausgangssignal dem an einem Ausgang der Vergleichereinrichtung anliegenden Vergleichssignal entspricht.

Vorzugsweise weist die Messvorrichtung eine Verzögerungseinheit für das Vergleichssignal auf, um eine Entladeschaltung verzögert anzusteuern, so dass der Kondensator nach einer vorbestimmten Zeitverzögerung nach Erreichen des Bezugspotentials entladen wird. Auf diese Weise wird gewährleistet, dass die Frequenz der Schwingungsperiode des Ausgangssignals begrenzt wird und dass die Zeitdauer des Signalpegels des Vergleichssignals, während der die Kondensatorspannung über dem Bezugspotential liegt, ausreichend groß ist, um das periodische Ausgangssignal auszuwerten.

Erfindungsgemäß ist die Kapazität des Kondensators so gewählt, um mit dem Messstrom ohne Strahlungsempfang der Strahlungsempfangseinrichtung auf das Bezugspotential aufladbar zu sein.

Gemäß einer weiteren Ausführungsform ist ein Umgebungslichtsensor zum Generieren eines Messpotentials mit der Messvorrichtung verbunden, um den Kondensator zu entladen, wenn die Potentialdifferenz zwischen dem Potential des Kondensators und dem Messpotential das Bezugspotential übersteigt. Auf diese Weise kann der Einfluss des Umgebungslichts auf die Strahlungsempfangseinrichtung durch eine gesonderte Messung der Lichtstärke des Umgebungslichts reduziert oder eliminiert werden.

Der Umgebungslichtsensor kann eine weitere Empfangseinrichtung für das Umgebungslicht und einen weiteren Kondensator aufweisen, der mit einem von der weiteren Empfangseinrichtung generierten, von dem Umgebungslicht abhängigen weiteren Messstrom aufladbar ist, um das Messpotential zur Verfügung zu stellen. Dies stellt eine Möglichkeit dar, ein Messpotential, das abhängig ist von der Lichtstärke des Umgebungslichts, zur Verfügung zu stellen.

Es kann eine Subtrahiereinheit vorgesehen sein, um die Ladungspotentiale des Kondensators und des weiteren Kondensators voneinander zu subtrahieren. Es ist ferner eine Schmitt-Trigger-Einheit vorgesehen, um gemäß der Potentialdifferenz einen ersten Ausgangssignalpegel auszugeben, wenn die Potentialdifferenz die erste Spannungsschwelle, die dem vorgegebenen Bezugspotential entspricht, überschreitet und einen zweiten Ausgangssignalpegel auszugeben, wenn die Potentialdifferenz eine zweite niedrige Spannungsschwelle unterschreitet, so dass eine Hysterese gebildet wird.

Weiterhin kann die Messvorrichtung so gestaltet sein, um die Kondensatoren beim Wechsel vom zweiten Ausgangssignalpegel zum ersten Ausgangssignalpegel zu entladen und beim Wechsel von dem ersten Ausgangssignalpegel zu dem zweiten Ausgangssignalpegel gemäß dem Messstrom und dem weiteren Messstrom aufzuladen.

Die Strahlungsempfangseinrichtung und die Empfangsvorrichtung für das Umgebungslicht, sowie die Kapazitäten des Kondensators und des weiteren Kondensators können so gewählt sein, dass im Wesentlichen bei jeder auftretenden Lichtstärke des Umgebungslichts und/oder der empfangenen Strahlung beim Aufladen die Spannung des Kondensators schneller steigt, als die Spannung des weiteren Kondensators.

Um das periodische Ausgangssignal auszuwerten, kann eine Auswerteeinheit vorgesehen sein, um aus der Periodendauer, der Anzahl der Perioden in einem vorbestimmten Zeitbereich und/oder der Frequenz des periodischen Ausgangssignals die Strahlungsstärke zu bestimmen.

Gemäß einem weiteren Aspekt der vorliegenden Erfindung ist ein Feuchtigkeitssensor mit einer solchen erfindungsgemäßen Messeinheit und einer Strahlungssensoreinrichtung vorgesehen, um eine Strahlung auf die Oberfläche zu emittieren.

Bevorzugte Ausführungsform der Erfindung werden im Folgenden anhand der beigefügten Zeichnungen näher erläutert. Es zeigen:
Figur 1 einen erfindungsgemäßen Feuchtigkeitssensor gemäß einer ersten Ausführungsform der Erfindung;
Figur 2 ein elektronisches Schaltbild zur Realisierung der Messeinheit in dem Feuchtigkeitssensor nach Figur 1; und
Figur 3 ein Blockschaltbild gemäß einer zweiten Ausführungsform der Erfindung.

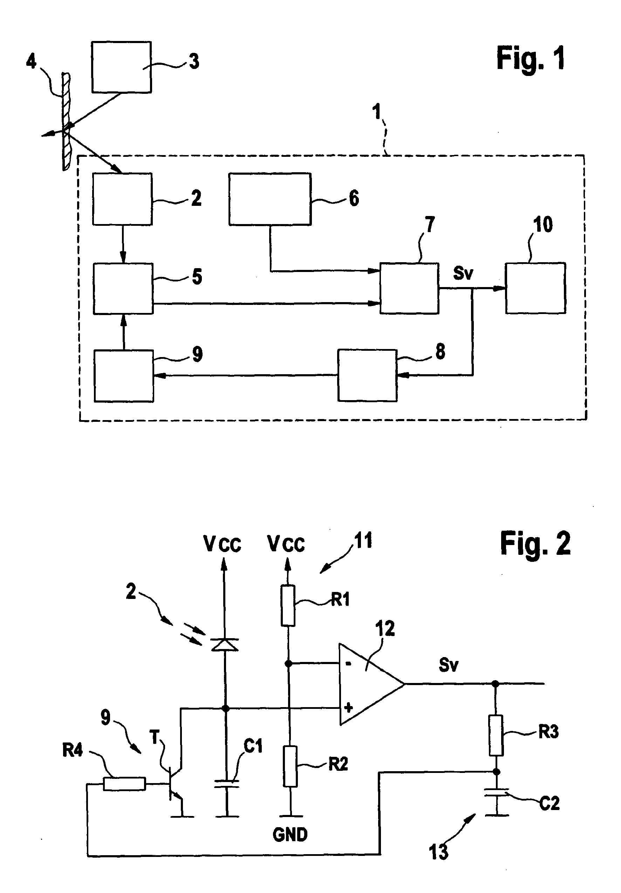

In Figur 1 ist ein Feuchtigkeitssensor gemäß einer ersten Ausführungsform der Erfindung dargestellt. Der Feuchtigkeitssensor weist eine Messeinheit 1 auf, die eine Strahlungsempfangseinheit 2 umfasst. Die Strahlungsempfangseinheit 2 ist so gestaltet, um eine von einer Strahlungssendeeinheit 3 emittierte und an einer Oberfläche 4 reflektierten Strahlung zu empfangen. Die Strahlungssendeeinheit 3 ist vorzugsweise als LED ausgebildet. Der Feuchtigkeitssensor detektiert Feuchtigkeit auf einer der äußeren Umgebung ausgesetzten Oberfläche, indem der reflektierte Anteil der auf die Oberfläche 4 gerichteten Strahlung gemessen wird, der ein Maß für die Menge an Feuchtigkeit oder Regentropfen auf der Oberfläche 4 darstellt.

Die Strahlungsempfangseinrichtung 2 umfasst vorzugsweise eine Photodiode, durch die abhängig von der einfallenden Strahlung ein Messstrom fließt. Dieser Messstrom wird dazu verwendet, einen mit der Photodiode 2 verbundenen Kondensator auf ein Kondensatorpotential aufzuladen. Das Kondensatorpotential wird mit einem Bezugspotential, das von einer Bezugspotentialquelle 6 bereitgestellt wird, in einer Vergleichereinrichtung 7 verglichen und ein Vergleichssignal Sᵥ an einem Ausgang der Vergleichereinrichtung 7 ausgegeben. Das Vergleichssignal Sᵥwird an einen Eingang einer Verzögerungseinrichtung 8 angelegt. Der Ausgang der Verzögerungseinrichtung 8 gibt das Vergleichssignal mit einer vorbestimmten Zeitverzögerung an eine mit der Verzögerungseinrichtung 8 verbundenen Entladevorrichtung 9 aus, die bei Aktivierung durch das verzögerte Vergleichssignal den Kondensator entlädt.

Die Vergleichereinrichtung 7 gibt einen ersten Signalpegel des Vergleichssignals aus, wenn das Kondensatorpotential des Kondensators 5 das Bezugspotential der Bezugsspannungsquelle 6 übersteigt. Ein zweiter Signalpegel des Vergleichssignals Vₛ wird ausgegeben, wenn das Kondensatorpotential kleiner ist als das Bezugspotential. Nimmt das Vergleichssignal den ersten Signalpegel an, so wird nach einer bestimmten Verzögerung, die durch die Verzögerungseinrichtung 8 vorgegeben wird, die Entladeschaltung 9 aktiviert, so dass der Kondensator entladen wird. Das Kondensatorpotential sinkt sehr schnell, was dazu führt, dass das Vergleichssignal den zweiten Signalpegel annimmt. Dieser zweite Signalpegel liegt verzögert an der Entladevorschaltung 9 an, so dass diese verzögert ausgeschaltet bzw. deaktiviert wird. Nun kann der Ladevorgang des Kondensators 5 erneut erfolgen, bis die Kondensatorspannung das Bezugspotential erreicht. Durch die mithilfe der Verzögerungseinrichtung 8 und der Entladeschaltung 9 gebildete Rückkopplung wird ein periodisches Schwingen der Messeinheit 1 erreicht. Das Vergleichssignal Sᵥ nimmt periodisch den ersten und zweiten Signalpegel an und dient als Ausgangssignal, dessen Periodendauer ein Maß für den über die Photodiode 2 gelieferten Messstrom, d.h. ein Maß der von der Photodiode 2 empfangenen Strahlungsstärke ist.

Das periodische Ausgangssignal, das dem Vergleichssignal Sᵥ entspricht, wird einer Auswerteeinheit 10 zur Verfügung gestellt, die nun das periodische Ausgangssignal in geeigneter Weise auswerten kann, indem die Periodendauer, die Anzahl der Perioden innerhalb eines vorbestimmten Zeitbereichs, und/oder die Frequenz des Ausgangssignals bestimmt wird und dem gemessenen Wert das Maß an Feuchtigkeit auf der Oberfläche 4 zugeordnet wird.

Insbesondere ist es zur Vergrößerung des Messbereichs vorteilhaft, einen vorbestimmten Zeitbereich festzulegen, in dem die Anzahl der Schwingungen des periodischen Ausgangssignals gezählt wird, da man damit einen großen Messbereich realisieren kann. Insbesondere entfällt das Kalibrieren des Feuchtigkeitssensors, bei dem beispielsweise die Sendeleistung der Strahlungssendeeinrichtung 3 angepasst wird. Dies ist bei herkömmlichen Feuchtigkeitssensoren notwendig, da bei Einbau des Feuchtigkeitssensors in unterschiedliche Kraftfahrzeugtypen mit verschiedenen Windschutzscheiben unterschiedlicher Transmission eine Anpassung der durch die Strahlungsempfangseinrichtung zu empfangenen Strahlungen auf den Messbereich der jeweiligen Messeinheit angepasst werden muss. Durch das Umwandeln des Maßes an Feuchtigkeit auf der Oberfläche in ein Ausgangssignal variabler Periodendauer, die von dem Maß an Feuchtigkeit an der Oberfläche abhängt, wird erreicht, dass der Messbereich im Wesentlichen beliebig groß ist. So wird der Kondensator 5 der Messeinheit 1 so eingestellt, dass selbst bei einem geringst möglichen Stromfluss durch die Photodiode 2 noch die Periodendauer des Ausgangssignals durch die Auswerteeinheit 10 gemessen werden kann. Diese Periodendauer kann unter Umständen sehr lang sein, so dass bei einer Messung der Anzahl der Perioden über den vorgegebenen Zeitbereich der Zeitbereich so gewählt werden muss, dass mindestens eine Periode innerhalb des Zeitbereichs liegt.

Die Messeinheit eignet sich auch dafür, Strommessungen von anderen Sensoren, die in den Feuchtigkeitssensor integriert sind, mithilfe einer solchen Schaltung durchzuführen.

In Figur 2 ist eine Realisierung der erfindungsgemäßen Messeinheit nach Figur 1 in Form einer elektronischen Schaltung dargestellt. Wie bereits erwähnt, ist die Strahlungsempfangseinrichtung 2 als Photodiode ausgeführt. Die Bezugsspannungsquelle 6 wird im dargestellten Beispiel durch einen Spannungsteiler 11 gebildet, der einen ersten Widerstand R1 und einen zweiten Widerstand R2 umfasst, die in Reihe zwischen einem hohen Versorgungspotential VCC und einem Massepotential GND geschaltet sind. Die Vergleichereinrichtung 7 ist durch einen Differenzverstärker 12 gebildet, an dessen nicht invertierenden Eingang das Kondensatorpotential und an dessen invertierenden Eingang das Bezugspotential zwischen dem ersten und zweiten Widerstand R1, R2 des Spannungsteilers 11 abgegriffen wird, angelegt. Am Ausgang des Differenzverstärkers 12 liegt das Vergleichssignal Sᵥ an.

Die Verzögerungseinrichtung 8 wird durch Differenzierglied 13, das einen dritten Widerstand R3 und einen zweiten Kondensator C2 aufweist, gebildet. Auch andere Möglichkeiten sind denkbar, eine Verzögerungseinrichtung 8 zu schaffen. So kann eine Signalverzögerung auch durch eine digitale Verzögerungseinrichtung erreicht werden.

Das zwischen dem dritten Widerstand und dem zweiten Kondensator anliegende verzögerte Vergleichssignal wird an der Entladeschaltung 9 zugeführt. Die Entladeschaltung 9 weist einen vierten Widerstand R4 und einen Transistor T auf, an dessen Eingang das verzögerte Vergleichssignal SV anliegt. Der Transistor dient dazu, den ersten Kondensator C1 gemäß dem verzögerten Vergleichssignal kurz zu schließen, wenn dieser entladen werden soll.

Die Maximalfrequenz des periodischen Ausgangssignals wird im Wesentlichen durch die Verzögerung der Verzögerungseinrichtung 8 bestimmt. Nimmt man eine unendlich schnelle Aufladung des ersten Kondensators C1 auf das Bezugspotential an, so beträgt die Verzögerungszeit der Verzögerungseinrichtung 8 der gesamten Periodendauer und damit der größtmöglichen Frequenz, die das periodische Ausgangssignal annehmen kann. Auf diese Weise lässt sich die Messeinheit auf die angeschlossene Auswerteeinheit bzw. auf den Messbereich der angeschlossenen Auswerteeinheit 10 anpassen.

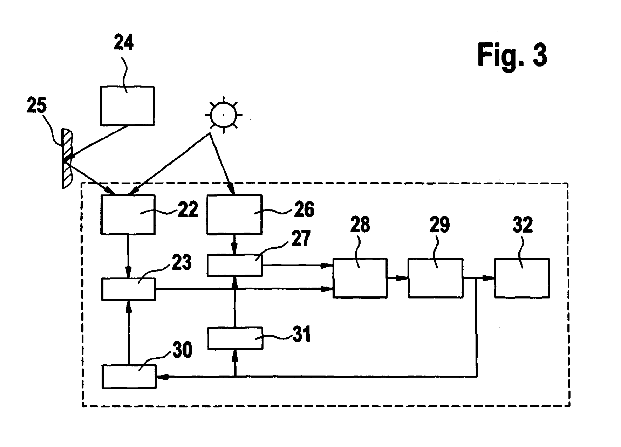

Ein Einstellen des Feuchtigkeitssensors ist dann auf einfache Weise möglich, indem die Periodendauer, Frequenz bzw. Anzahl der Perioden innerhalb eines Zeitbereichs bei Wasser und bei trockener Scheibe gemessen wird, wobei der Bereich zwischen den Messwerten den Bereich darstellt, in dem eine Feuchtigkeitsdetektion auf der Windschutzscheibe durchgeführt wird. In Figur 3 ist eine weitere Ausführungsform der Erfindung dargestellt. Ebenso wie auf die zuvor bezüglich der ersten Ausführungsform der Erfindung beschriebenen Weise wird durch eine Strahlungsempfangseinrichtung 22, die eine Photodiode umfassen kann, ein von der empfangenen Strahlungsstärke abhängiger Strom dazu benutzt, einen Kondensator 23 aufzuladen. Die Strahlungsempfangseinrichtung 22 empfängt neben der von der Strahlungssendeeinrichtung 24 emittierten und an der Oberfläche 25 reflektierten Strahlung auch Umgebungslicht, das insbesondere bei auftretenden Schwankungen zu einer Störung der Messung führen kann.

Um den Einfluss des Umgebungslichts möglichst zu eliminieren, ist eine Empfangseinrichtung für Umgebungslicht vorgesehen, die abhängig von der Lichtstärke des Umgebungslichts einen weiteren Messstrom durchlässt und mit dem weiteren Messstrom einen weiteren Kondensator 27 auflädt. In einem Subtrahierer 28 werden die in den Kondensatoren 23, 27 befindlichen Potentiale voneinander subtrahiert und die gebildete Potentialdifferenz einem Schmitt-Trigger 29 zugeführt. Beim Aufladen der Kondensatoren 23, 27 steigt die Potentialdifferenz zwischen den in den Kondensatoren 23, 27 befindlichen Potentialen an, bis eine durch den Schmitt-Trigger 29 vorgegebene erste Spannungsschwelle erreicht bzw. überschritten wird. Bei Überschreiten dieser ersten Spannungsquelle gibt der Schmitt-Trigger 29 einen ersten Signalpegel des Ausgangssignals aus. Der erste Signalpegel des Ausgangssignals steht einer ersten Entladeschaltung 30 und einer zweiten Entladeschaltung 31 gleichzeitig zur Verfügung. Die Entladeschaltungen 30, 31 dienen dazu, den ersten und zweiten Kondensator 23, 27 bei dem ersten Signalpegel des Ausgangssignals zu entladen. Das Entladen der Kondensatoren 23, 27 führt dazu, dass die Potentialdifferenz abfällt. Unterschreitet die Potentialdifferenz eine zweite Spannungsschwelle, die in dem Schmitt-Trigger 29 vorgegeben ist, wird ein zweiter Signalpegel des Ausgangssignals angenommen, wodurch das Entladen der Kondensatoren 23, 27 gestoppt wird und die Kondensatoren 23, 27 durch die von den jeweiligen Empfangseinrichtungen gelieferten Messströme wieder aufgeladen werden.

Die Strahlungsempfangseinrichtung 22, die Empfangseinrichtung für das Umgebungslicht 26, sowie die zugehörigen Kondensatoren 23, 27 sind so zueinander dimensioniert, dass selbst ohne einfallendes Umgebungslicht und/oder ohne eine auf die Strahlungsempfangseinrichtung einfallende Strahlung die Potentialdifferenz die erste Spannungsschwelle innerhalb einer vorbestimmten Zeit erreicht. Die vorbestimmte Zeit ist vorzugsweise kleiner als der Zeitbereich, in dem die Anzahl der Perioden einer Auswerteeinheit 32 gezählt werden. Es können jedoch auch gleiche Typen von Empfangseinrichtungen 22, 26 und gleiche Kapazitäten der Kondensatoren 23, 27 vorgesehen werden, so dass der Einfluss des Umgebungslichts im Wesentlichen vollständig eliminiert werden kann. Da selbst bei vollständiger Benetzung der Oberfläche 25, d.h. der Windschutzscheibe, noch Strahlung auf die Strahlungsempfangseinrichtung 22 einfällt, so dass ein Strom durch die Strahlungsempfangseinrichtung 22 fließen kann, steigt die Potentialdifferenz am Ausgang des Subtrahierers 28 ständig an, so dass eine messbare Periodendauer bzw. Frequenz des Ausgangssignals messbar ist.

## Patentansprüche

1. Messeinheit (1) für einen Feuchtikeitssensor zum Detektieren von Feuchtigkeit auf einer Oberfläche (4) und zum Ausgeben eines periodischen Ausgangssignals, mit einer Strahlungsempfangseinrichtung (2), um einen von dem Maß an Feuchtigkeit auf der Oberfläche (4) abhängige Strahlung zu empfangen, und mit einer Messvorrichtung, die mit der Strahlungsempfangseinrichtung (2) verbunden ist und die einen Kondensator (5) aufweist, der mit einem von dem Anteil der empfangenen Strahlung abhängigen Messstrom aufladbar ist, wobei die Messvorrichtung so gestaltet ist, um den Kondensator (5) periodisch bis zu einem von einem vorgegebenen Bezugspotential bestimmten Potential aufzuladen und anschließend zu entladen, und um ein periodisches Ausgangssignal auszugeben, dessen Periodendauer durch das Aufladen und Entladen bestimmt ist und von dem Maß der empfangenen Strahlung abhängt, **dadurch gekennzeichnet, daß** die Kapazität (5) des Kondensators so gewählt ist, um mit dem Messstrom mit im wesentlichen keinem Strahlungsempfang durch die Strahlungsempfangseinrichtung (2) auf das Bezugspotential aufladbar zu sein.

2. Messeinheit (1) nach Anspruch 1, wobei das Bezugspotential fest vorgegeben ist, wobei die Messvorrichtung eine Vergleichereinrichtung (7) aufweist, um das Kondensatorpotential mit dem Bezugspotential zu vergleichen, wobei die Messvorrichtung den Kondensator (5) gemäß einem an einem Ausgang der Vergleichereinrichtung (7) anliegenden Vergleichssignal (Sᵥ) entlädt, nachdem das Bezugspotential erreicht wurde.

3. Messeinheit (1) nach Anspruch 2, wobei die Messvorrichtung eine Verzögerungseinheit (8) für das Vergleichssignal (Sᵥ) aufweist, um eine Entladeschaltung verzögert anzusteuern, so dass der Kondensator (5) nach einer vorbestimmten Zeitverzögerung nach Erreichen des Bezugspotentials entladen wird.

4. Messeinheit (1) nach Anspruch 1, wobei ein Umgebungslichtsensor zum Generieren eines Messpotentials mit der Messvorrichtung verbunden ist, um den Kondensator (5) zu entladen, wenn die Potentialdifferenz zwischen dem Potential des Kondensators (5) und dem Messpotential des Bezugspotentials übersteigt.

5. Messeinheit (1) nach Anspruch 4, wobei der Umgebungslichtsensor eine weitere Empfangseinrichtung für das Umgebungslicht und einen weiteren Kondensator (27) aufweist, der mit einem von der weiteren Empfangseinrichtung generierten, von dem Umgebungslicht abhängigen weiteren Messstrom aufladbar ist, um das Messpotential zur Verfügung zu stellen.

6. Messeinheit (1) nach Anspruch 5, wobei eine Subtrahiereinheit (28) vorgesehen ist, um das die Ladungspotentiale des Kondensators (23) und des weiteren Kondensators (27) voneinander zu subtrahieren, wobei eine Schmitt-Trigger-Einheit (29) vorgesehen ist, um gemäß der Potentialdifferenz einen ersten Ausgangssignalpegel auszugeben, wenn die Potentialdifferenz die erste Spannungsschwelle, die dem vorgegebenen Bezugspotential entspricht, überschreitet, und einen zweiten Ausgangssignalpegel auszugeben, wenn die Potentialdifferenz eine zweite niedrige Spannungsschwelle unterschreitet, so dass eine Hysterese gebildet wird, und um die Kondensatoren (23, 27) beim Wechsel von dem zweiten Ausgangssignalpegel zu dem ersten Ausgangssignalpegel zu entladen und beim Wechsel von dem ersten Ausgangssignalpegel zu dem zweiten Ausgangssignalpegel gemäß dem Messstrom und dem weiteren Messstrom auf zu laden.

7. Messeinheit (1) nach Anspruch 6, wobei die Strahlungsempfangseinrichtung (22) und die Empfangsvorrichtung (26) für das Umgebungslicht, sowie die Kapazitäten des Kondensators (23) und des weiteren Kondensators (27) so gewählt sind, dass im wesentlichen bei jeder auftretenden Lichtstärke und/oder der empfangenen Strahlung des Umgebungslichtes beim Aufladen die Spannung des Kondensators (23) schneller steigt als die Spannung des weiteren Kondensators (27).

8. Messeinheit (1) nach einem der Ansprüche 1 bis 7, wobei eine Auswerteeinheit (10) vorgesehen ist, um aus der Periodendauer, der Anzahl der Perioden in einen vorbestimmten Zeitbereich und/oder der Frequenz des periodischen Ausgangssignals die Strahlungsstärke zu bestimmen.

9. Feuchtigkeitssensor mit einer Messeinheit (1) nach einem der vorangehenden Ansprüche und eine Strahlungssendeeinrichtung (3), um eine Strahlung auf die Oberfläche (4) zu emittieren.

## Claims

1. Measurement unit (1) for a moisture sensor for detecting moisture on a surface (4) and for outputting a periodic output signal, comprising a radiation-receiving device (2), in order to receive radiation which is dependent on the amount of moisture on the surface (4), and comprising a measurement apparatus which is connected to the radiation-receiving device (2) and which has a capacitor (5) which can be charged with a measurement current which is dependent on the proportion of the received radiation, with the measurement apparatus being configured such that the capacitor (5) is periodically charged up to a potential which is determined by a predefined reference potential and then discharged, and a periodic output signal is output, whose period duration is determined by the charging and discharging operations and depends on the amount of received radiation, **characterized in that** the capacitance (5) of the capacitor is selected such that it can be charged to the reference potential with the measurement current with substantially no radiation being received by the radiation-receiving device (2).

2. Measurement unit (1) according to Claim 1, with the reference potential being firmly predefined, with the measurement apparatus having a comparator device (7) in order to compare the capacitor potential with the reference potential, with the measurement apparatus discharging the capacitor (5) in accordance with a comparison signal (Sᵥ) which is produced at an output of the comparator device (7) after the reference potential has been reached.

3. Measurement unit (1) according to Claim 2, with the measurement apparatus having a delay unit (8) for the comparison signal (Sᵥ) in order to actuate a discharging circuit with a delay, so that the capacitor (5) is discharged after a predetermined time delay after the reference potential is reached.

4. Measurement unit (1) according to Claim 1, with an ambient-light sensor for generating a measurement potential being connected to the measurement apparatus in order to discharge the capacitor (5) when the potential difference between the potential of the capacitor (5) and the measurement potential exceeds the reference potential.

5. Measurement unit (1) according to Claim 4, with the ambient-light sensor having a further receiving device for the ambient light and a further capacitor (27) which can be charged with a further measurement current, which is generated by the further receiving device and is dependent on the ambient light, in order to provide the measurement potential.

6. Measurement unit (1) according to Claim 5, with a subtraction unit (28) being provided in order to subtract the charging potentials of the capacitor (23) and of the further capacitor (27) one from the other, with a Schmitt trigger unit (29) being provided in order to output a first output signal level in accordance with the potential difference when the potential difference exceeds the first voltage threshold, which corresponds to the predefined reference potential, and to output a second output signal level when the potential difference falls below a second low voltage threshold, so that a hysteresis is formed, and in order to discharge the capacitors (23, 27) when changing over from the second output signal level to the first output signal level and to charge the said capacitors when changing over from the first output signal level to the second output signal level in accordance with the measurement current and the further measurement current.

7. Measurement unit (1) according to Claim 6, with the radiation-receiving device (22) and the receiving apparatus (26) for the ambient light and also the capacitances of the capacitor (23) and of the further capacitor (27) being selected such that the voltage of the capacitor (23) increases more rapidly than the voltage of the further capacitor (27) substantially at each occurring light intensity and/or the received radiation of the ambient light during charging.

8. Measurement unit (1) according to one of Claims 1 to 7, with an evaluation unit (10) being provided in order to determine the radiation intensity from the period duration, the number of periods in a predetermined time interval and/or the frequency of the periodic output signal.

9. Moisture sensor comprising a measurement unit (1) according to one of the preceding claims, and a radiation-transmitting device (3), in order to emit radiation to the surface (4).

## Revendications

1. Elément de mesure (1) pour un capteur d'humidité servant à détecter l'humidité sur une surface (4) pour émettre un signal de sortie périphérique, comprenant une installation de réception de rayonnement (2) recevant un rayonnement dépendant du degré d'humidité sur la surface (4) ainsi qu'un dispositif de mesure relié à l'installation de réception de faisceau (2) et ayant un condensateur (5) chargé par un courant de mesure dépendant de la composante de rayonnement reçue,
le dispositif de mesure étant conçu pour charger périodiquement le condensateur (5) à un potentiel défini par un potentiel de référence prédéterminée et ensuite le décharger et pour fournir un signal de sortie périodique dont la durée est définie par la charge et la décharge et qui dépend de la mesure du rayonnement reçu,
**caractérisé en ce que**
la capacité (5) du condensateur est choisie pour se charger au potentiel de référence avec le courant de mesure lorsque l'installation de réception de rayonnement (2) ne reçoit pratiquement pas de rayonnement.

2. Elément de mesure (1) selon la revendication 1 dans lequel le potentiel de référence est prédéfini de manière fixe,
le dispositif de mesure comporte une installation de comparaison (7) pour comparer le potentiel du condensateur au potentiel de référence,
le dispositif de mesure déchargeant le condensateur (5) selon un signal de comparaison (Sᵥ) appliqué à la sortie de l'installation de comparaison (7) après avoir atteint le potentiel de référence.

3. Elément de mesure (1) selon la revendication 2, dans lequel le dispositif de mesure comporte une unité de temporisation (8) pour le signal de comparaison (Sᵥ), pour commander de façon retardée un circuit de décharge pour décharger le condensateur (5) après une temporisation prédéterminée, après avoir atteint le potentiel de référence.

4. Elément de mesure (1) selon la revendication 1, dans lequel un capteur de lumière ambiante est relié au dispositif de mesure pour générer un potentiel de mesure et décharger le condensateur (5) si la différence de potentiel entre le potentiel du condensateur (5) et le potentiel de mesure dépasse le potentiel de référence.

5. Elément de mesure (1) selon la revendication 4, dans lequel le capteur de lumière ambiante comporte une autre installation de réception pour la lumière ambiante et un autre condensateur (27) qui se charge avec un autre courant de mesure dépendant de la lumière ambiante en étant généré par l'autre installation de réception, pour fournir le potentiel de mesure.

6. Elément de mesure (1) selon la revendication 5, dans lequel il est prévu une unité de soustraction (28) pour soustraire les potentiels de charge du condensateur (23) et de l'autre condensateur (27), l'un de l'autre, une unité de déclencheur de Schmitt (29) étant prévue pour générer un premier niveau de signal de sortie selon la différence de potentiel si la différence de potentiel dépasse le premier seuil de tension correspondant au potentiel de référence prédéfini et pour émettre un second niveau de signal de sortie si la différence de potentiel passe en dessous d'un second seuil de tension bas, pour avoir une hystérésis et pour décharger les condensateurs (23, 27) lors d'un changement par passage du second niveau du signal de sortie au premier niveau du signal de sortie et pour charger les condensateurs lors d'un changement par passage du premier niveau de signal de sortie au second niveau de signal de sortie selon le courant de mesure et l'autre courant de mesure.

7. Elément de mesure (1) selon la revendication 6, dans lequel l'installation de réception de rayonnement (22) et le dispositif de réception (26) pour la lumière ambiante ainsi que les capacités du condensateur (23) et de l'autre condensateur (27) sont choisis pour que pratiquement pour chaque intensité lumineuse produite et/ou le rayonnement de lumière ambiante reçue, lors de la charge, la tension du condensateur (23) augmente plus rapidement que la tension de l'autre condensateur (27).

8. Elément de mesure (1) selon l'une des revendications 1 à 7, comportant une unité d'exploitation (10) pour déterminer l'intensité du rayonnement à partir de la durée de la période, du nombre de périodes dans une plage de temps prédéfinie et/ou de la fréquence du signal de sortie périodique.

9. Capteur d'humidité comportant un élément de mesure (1) selon l'une des revendications précédentes et une installation d'émission de rayonnement (3) pour émettre un rayonnement vers la surface (4).
